# EUROPÄISCHE PATENTSCHRIFT

(11) **EP 2 505 453 B1**
(45) Veröffentlichungstag und Bekanntmachung des Hinweises auf die Patenterteilung: **04.04.2018**
(21) Anmeldenummer: 12154249.2
(22) Anmeldetag: 07.02.2012
(51) Int. Cl.: B62B 3/08

(54) **Transportwagen**
transport cart
chariot de transport

(30) Priorität: 01.04.2011 DE 202011000767 U; 27.09.2011 DE 202011051446 U
(43) Veröffentlichungstag der Anmeldung: 03.10.2012
(73) Patentinhaber: LR Intralogistik GmbH, 84109 Wörth a. d. Isar (DE)
(72) Erfinder: Berghammer, Fritz, 84036 Landshut (DE)
(74) Vertreter: Patentship Patentanwaltsgesellschaft mbH

(56) Entgegenhaltungen:
- DE-U1-202010 003 076
- US-A- 5 454 625
- US-A- 5 846 043
- US-A1- 2005 036 871

## Beschreibung

Die Erfindung betrifft einen Transportwagen mit einem Fahrgestell und einem auf diesem gelagerten Tragrahmen zur Aufnahme eines Behälters mit einer oberen Öffnung zum Einfüllen und zur Entnahme von Transportgut, wobei der Tragrahmen um eine horizontale Achse aus einer vertikalen Transportstellung, in der die Öffnung des Behälters nach oben weist, nach beiden Seiten kippbar auf dem Fahrgestell gelagert ist.

Mit Hilfe eines solchen Transportwagens werden in der industriellen Fertigung Transportgüter, beispielsweise Maschinenteile, Einzelteile oder Ersatzteile, von einem Lager zum Einsatzort befördert, beispielsweise einem Montageplatz. Der Transportwagen wird hierzu nach der Beladung mit dem Behälter, z. B. einer Gitterbox oder einer Normkiste, im Zugverbund eines Routenzugs mitgenommen und am Montageplatz abgestellt, wo das zuständige Personal die Teile zur Weiterverarbeitung einzeln entnimmt.

Aus dem deutschen Gebrauchsmuster 20 2009 008 725 ist ein Transportwagen bekannt, bei dem der Tragrahmen für die Aufnahme des Behälters auf zwei parallelen, schrägen Rollenbahnen gelagert ist, so dass er aus der Transportstellung auf dem Fahrgestell auf den Boden geschoben werden kann, wo der rollengeführte Tragrahmen während der Entnahme der Transportgüter aus dem Behälter verbleibt.

Nachteilig bei den bekannten Systemen ist die Tatsache, dass die eingesetzten Behälter, beispielsweise Gitterboxen, verhältnismäßig hoch sind, so dass sie auch in ihrer Stellung auf dem Boden umständlich zu entleeren sind. Zur Entnahme der im Bereich der Behälteröffnung liegenden Gegenstände erreicht die Bedienungsperson die zu entnehmenden Teile nur mit nach oben gestreckten Armen, während am Behältergrund liegende Gegenstände nur mit Mühe oder unter Zuhilfenahme von Greifwerkzeugen erreicht werden.

Aus der US 5 454 625 A ist ein Transportwagen gemäß dem Oberbegriff von Anspruch 1 mit einer Plattform bekannt, die anhebbar und absenkbar auf einem Fahrgestell angeordnet ist. An der Plattform ist über eine Schwenklagerung, die an Trägern der Plattform ausgebildet ist, ein Behälter zur Seite kippbar gelagert.

Die US 2005/036871 A1 offenbart einen Transportwagen, bei dem ein Behälter auf einer Rollenbahn gelagert werden kann. Zur Sicherung des auf der Rollenbahn stehenden Behälters während des Transports ist ein Bügel vorgesehen, der den Behälter im oberen Bereich umgreift. Der Bügel kann um eine horizontale Schwenkachse verschwenkt werden, um den Behälter aufladen und abladen zu können.

Der Erfindung liegt die Aufgabe zugrunde, einen Transportwagen der eingangs umrissenen Bauart zur Verfügung zu stellen, der mit dem aufgesattelten Behälter am Einsatzort verbleibt und eine bequeme Entnahme der benötigten Gegenstände ermöglicht.

Gemäß der Erfindung ist zur Lösung dieser Aufgabe vorgesehen, dass der Tragrahmen zwei in parallelen Vertikalebenen liegende, teilkreisförmige Schwingkufen hat, von denen jede im Eingriff mit einer am Fahrgestell angebrachten, ebenfalls teilkreisförmigen Führungskulisse ist.

Diese Lösung hat gegenüber dem Stand der Technik den Vorteil, dass der zu leerende Behälter mittels des kippbaren Tragrahmens auf die gewünschte Seite geschwenkt werden kann, so dass auch weiter unten liegende Gegenstände mühelos erreicht werden können.

Dabei kann nach einem weiteren Merkmal der Erfindung vorgesehen sein, dass jede der beiden in parallelen Vertikalebenen liegenden Führungskulissen aus einer im Querschnitt C-förmigen Schiene besteht, in die um horizontale Achsen drehbare Tragrollen eingreifen, die von der zugeordneten Schwingkufe des Tragrahmens abstehen.

Mit diesen erfindungsgemäß vorgesehenen Maßnahmen lassen sich auch schwere Behälter, die mit einer großen Zahl von Gegenständen beladen sind, ohne großen Kraftaufwand von Hand in die gewünschte Kippstellung schwenken. Bei der Beladung ist lediglich dafür zu sorgen, dass der Lastschwerpunkt leicht unterhalb der horizontalen Kippachse des Tragrahmens und damit in Längsrichtung zwischen den Lenkrollen des Fahrgestells liegt, so dass eine Kippgefahr für den beladenen Transportwagen ausgeschlossen ist.

Eine auch nach beiden Seiten möglichst reibungsfreie Führung beim Schwenken wird dadurch erreicht, dass an jeder Schwingkufe Führungsrollen frei drehbar gelagert sind, die sich an einer gegenüberliegenden Vertikalfläche der Führungskulisse abstützen und deren Drehachsen radial zur horizontalen Kippachse verlaufen.

Um den Tragrahmen in beiden seitlichen Kippstellungen und in der vertikalen Transportstellung verriegeln zu können, ist in Weiterbildung der Erfindung an einer der beiden Schwingkufen ein parallel zur horizontalen Kippachse verstellbarer, federbelasteter Bolzen angeordnet, für dessen Rasteingriff drei Bohrungen in der gegenüberliegenden Führungskulisse angebracht sind.

Vorzugsweise haben die drei Bohrungen einen Winkelabstand von je 30° zueinander.

Weitere Merkmale und Vorteile der Erfindung ergeben sich aus den Patentansprüchen und aus der folgenden Beschreibung eines Ausführungsbeispiels, das in der Zeichnung dargestellt ist. Es zeigen:
- Figur 1: die Vorderansicht eines Transportwagens gemäß der Erfindung,
- Figur 2: die Seitenansicht des Transportwagens,
- Figur 3: die Draufsicht auf den Transportwagen,
- Figur 4: eine perspektivische Darstellung des Transportwagens der Figuren 1 bis 3 in der Transportstellung des Tragrahmens,
- Figur 5: eine der Figur 4 ähnliche Darstellung in einer der beiden Kippstellungen des Tragrahmens,
- Figur 6: den Tragrahmen in der zur anderen Seite geschwenkten Kippstellung,
- Figur 7: die Vorderansicht des Transportwagens in der Kippstellung der Figur 5 und
- Figur 8: die Vorderansicht in der Kippstellung des Tragrahmens der Figur 6.

Der in den Figuren insgesamt mit 10 bezeichnete Transportwagen hat ein in Draufsicht rechteckiges Fahrgestell 12, an dessen vier Ecken jeweils eine Lenkrolle 14 angebracht ist. Das Fahrgestell 12 besteht aus zwei parallelen Längsträgern 16, die über zwei Querträger 18 miteinander verbunden sind.

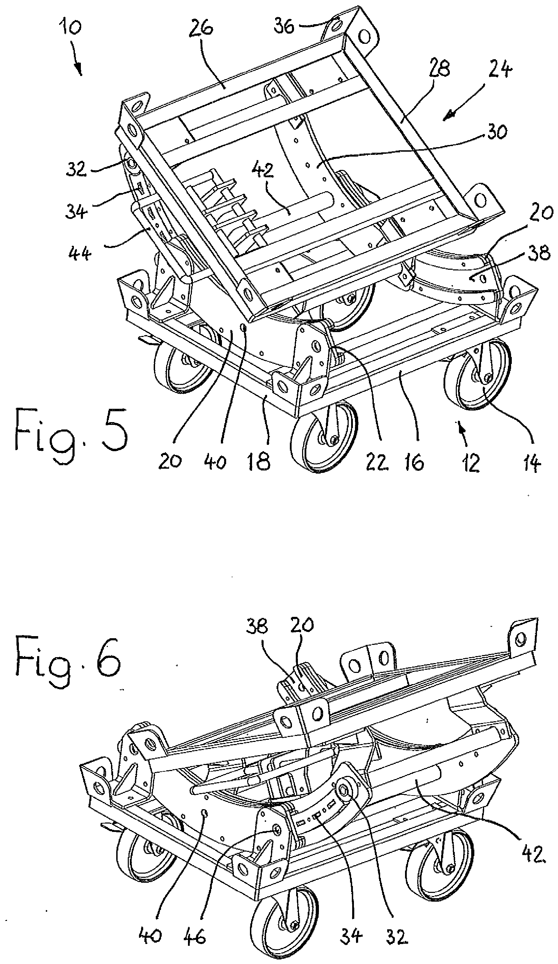

Im Bereich der beiden Querträger 18 des Fahrgestells 12 ist jeweils eine teilkreisförmige Führungskulisse 20 befestigt, die beide in parallelen Vertikalebenen liegen. Wie in Figur 5 zu erkennen ist, besteht jede Führungskulisse 20 aus einer im Querschnitt C-förmigen Schiene 22.

Auf dem Fahrgestell 12 ist ein Tragrahmen 24 gelagert, der in Draufsicht ebenfalls die Form eines dem Fahrgestell 12 entsprechenden Rechtecks hat. Der Tragrahmen 24 hat zwei äußere Längsholme 26, die sich parallel zu den Längsträgern 16 des Fahrgestells 12 erstrecken und die an beiden Enden durch je einen Querholm 28 miteinander verbunden sind. An jedem Querholm 28 ist eine Schwingkufe 30 befestigt, die teilkreisförmig ausgebildet ist und der Teilkreisform der zugehörigen Führungskulisse 20 entspricht. Die Schwingkufen 30 liegen in zwei parallelen Vertikalebenen entsprechend den Vertikalebenen der beiden Führungskulissen 20.

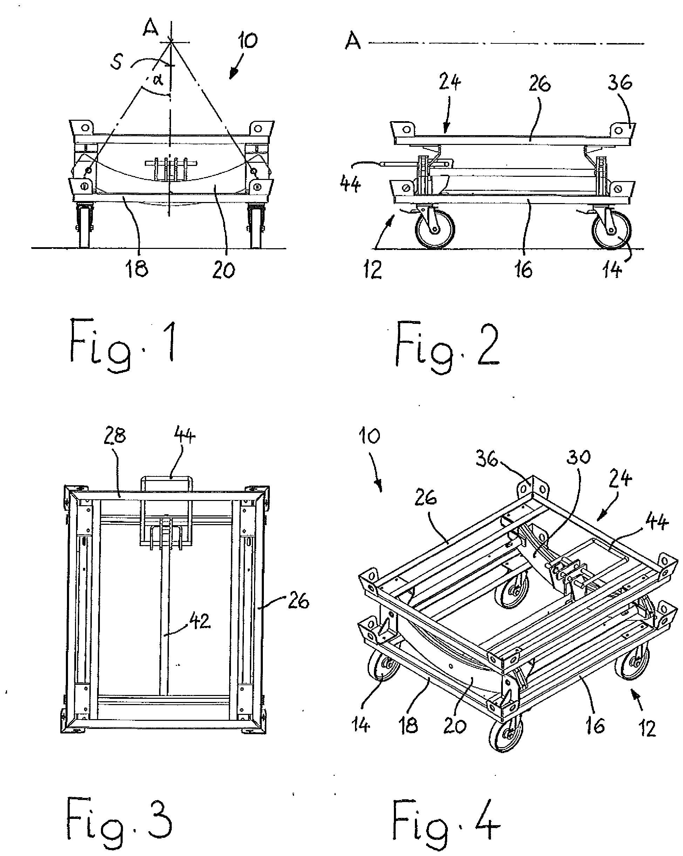

An jeder Schwingkufe 30 des Tragrahmens 24 sind drei Tragrollen 32 gelagert, die um ihre zugeordnete Horizontalachse frei drehbar sind. Alle drei Tragrollen 32 jeder Schwingkufe 30 dienen zum Eingriff in die C-förmige Schiene 22 der Führungskulisse 20, so dass der Tragrahmen 24 nahezu reibungsfrei auf dem Fahrgestell 12 um eine in Längsrichtung verlaufende Kippachse A (vgl. Figur 1) geschwenkt werden kann. Die Kippachse A bildet dabei den Mittelpunkt jeder der beiden teilkreisförmigen Schwingkufen 30 und Führungskulissen 20.

Zur weiteren reibungsarmen Führung des Tragrahmens 24 auf dem Fahrgestell 12 dienen Führungsrollen 34, die an jeder der beiden Schwingkufen 30 um Drehachsen frei drehbar gelagert sind, welche radial zur horizontalen Kippachse A verlaufen. Die Führungsrollen 34 stützen sich dabei an der jeweils gegenüberliegenden Vertikalfläche 38 der C-förmigen Schiene 22 ab.

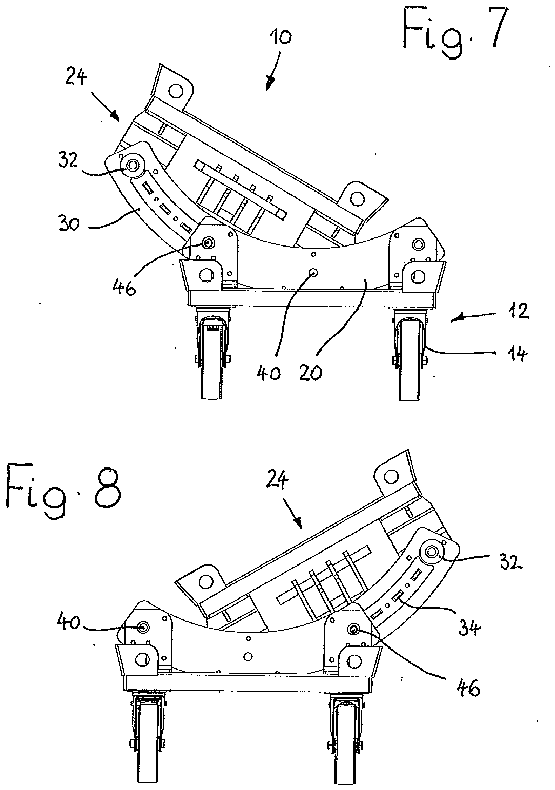

Der Tragrahmen 24 dient zur Aufnahme eines nicht dargestellten Behälters, der sich an den Ecken des Tragrahmens 24 an nach oben abstehenden Anschlagwinkeln 36 abstützt. Der Tragrahmen 24 kann sowohl in der vertikalen Transportstellung des Behälters, die sich aus Figur 4 ergibt, als auch in den beiden seitlichen Kippstellungen nach den Figuren 5 bis 8 verriegelt werden. Hierzu ist an einer der beiden Schwingkufen 30 ein parallel zur horizontalen Kippachse A ausgerichteter Bolzen 46 vorgesehen, der gegen eine Feder in axialer Richtung verstellt werden kann. Für den Rasteingriff des Bolzens 46 sind insgesamt drei Bohrungen 40 in der gegenüberliegenden Führungskulisse 20 angebracht. Die beiden äußeren Bohrungen 40 haben einen Winkelabstand α von 30° zur mittleren Bohrung 40 (vgl. Figur 1).

Der axial verstellbare Bolzen 46 ist in einem in Längsrichtung verlaufenden Rohr 42 gelagert, das die beiden Schwingkufen 30 mittig miteinander verbindet. An diesem Rohr 42 ist die mittlere der drei Tragrollen 32 gelagert, die ständig in Eingriff mit der C-förmigen Schiene 22 der Führungskulisse 20 ist.

In der mittleren Transportstellung des Tragrahmens 24 sind alle drei Tragrollen 32 jeder Schwingkufe 30 in Eingriff mit der C-förmigen Schiene 22.

Beim Kippen des Tragrahmens 24 aus dieser mittleren Transportstellung nach der gewünschten Seite schnappt der Bolzen 46, der innerhalb des Rohres 40 von einer Feder belastet wird, in die gegenüberliegende Bohrung 40 der Führungskulisse 20 ein, so dass der Tragrahmen 24 mit dem aufgesattelten Behälter in dieser Kippstellung verriegelt wird. Zum Entriegeln dient ein am Tragrahmen 24 angebrachtes Pedal 44, das beim Niederdrücken um eine Querachse den Bolzen 46 gegen die Federkraft aus der Raststellung der jeweiligen Bohrung 40 löst.

Wie bereits erwähnt, muss bei der Beladung beachtet werden, dass der Schwerpunkt S (s. Figur 1) der nicht dargestellten Last, im allgemeinen ein Behälter, unter der Kippachse A liegt. Bei dem gewählten Schwenkwinkel von α = 30° nach beiden Seiten bleibt der Lastschwerpunkt S dann immer zwischen den Lenkrollen 14 des Fahrgestells 12, so dass der beladene Transportwagen 10 nicht kippen kann.

## Patentansprüche

1. Transportwagen mit einem Fahrgestell (12) und einem auf diesem gelagerten Tragrahmen (24) zur Aufnahme eines Behälters mit einer oberen Öffnung zum Einfüllen und zur Entnahme von Transportgut, wobei der Tragrahmen (24) um eine horizontale Achse (A) aus einer vertikalen Transportstellung, in der die Öffnung des Behälters nach oben weist, nach beiden Seiten kippbar auf dem Fahrgestell (12) gelagert ist, **dadurch gekennzeichnet, dass** der Tragrahmen (24) zwei in parallelen Vertikalebenen liegende, teilkreisförmige Schwingkufen (30) hat, von denen jede in Eingriff mit einer am Fahrgestell (12) angebrachten, ebenfalls teilkreisförmigen Führungskulisse (20) ist.

2. Transportwagen nach Anspruch 1, **dadurch gekennzeichnet, dass** jede der beiden in parallelen Vertikalebenen liegenden Führungskulissen (20) aus einer im Querschnitt C-förmigen Schiene (22) besteht, in die um horizontale Achsen drehbare Tragrollen (32) zum Eingriff kommen, die von der zugeordneten Schwingkufe (30) des Tragrahmens (24) abstehen.

3. Transportwagen nach Anspruch 1 oder 2, **dadurch gekennzeichnet, dass** an jeder Schwingkufe (30) Führungsrollen (34) frei drehbar gelagert sind, die sich an einer gegenüberliegenden Vertikalfläche (38) der C-förmigen Schiene (22) der Führungskulisse (20) abstützen und deren Drehachsen radial zur horizontalen Kippachse (A) verlaufen.

4. Transportwagen nach einem der vorhergehenden Ansprüche, **dadurch gekennzeichnet, dass** der Tragrahmen (24) in beiden seitlichen Kippstellungen und in der vertikalen Transportstellung verriegelbar ist.

5. Transportwagen nach Anspruch 4, **dadurch gekennzeichnet, dass** zur Verriegelung an einer der beiden Schwingkufen (30) ein parallel zur horizontalen Kippachse (A) axial verstellbarer, federbelasteter Bolzen (46) angeordnet ist, für dessen Rasteingriff drei Bohrungen (40) in der gegenüberliegenden Führungskulisse (20) angebracht sind.

6. Transportwagen nach Anspruch 5, **dadurch gekennzeichnet, dass** die Bohrungen (40) einen Winkelabstand (α) von 30° zueinander haben.

7. Transportwagen nach Anspruch 5 oder 6, **dadurch gekennzeichnet, dass** der axial verstellbare Bolzen (46) in einem die beiden teilkreisförmigen Schwingkufen (30) mittig miteinander verbindenden Rohr (42) angeordnet ist, an welchem die mittlere der Tragrollen (32) gelagert ist.

8. Transportwagen nach Anspruch 7, **dadurch gekennzeichnet, dass** zum Lösen des Bolzens (46) aus seiner in die jeweilige Bohrung (40) eingreifenden Raststellung ein am Tragrahmen (24) angebrachtes Pedal (44) dient.

## Claims

1. Transport cart with a chassis (12) and a supporting frame (24), which is mounted on the latter, for receiving a container with an upper opening for the insertion and for the removal of goods being transported, wherein the supporting frame (24) is mounted on the chassis (12) so as to be tiltable to both sides about a horizontal axis (A) from a vertical transport position in which the opening of the container points upwards, **characterized in that** the supporting frame (24) has two partially circular rocker-type runners (30) which lie in parallel vertical planes and of which each is in engagement with a likewise partially circular slotted guide link (20) attached to the chassis (12).

2. Transport cart according to Claim 1, **characterized in that** each of the two slotted guide links (20) lying in parallel vertical planes consists of a cross-sectionally C-shaped rail (22) in which supporting rollers (32) come into engagement, said supporting rollers being rotatable about horizontal axes and protruding from the associated rocker-type runner (30) of the supporting frame (24).

3. Transport cart according to Claim 1 or 2, **characterized in that** guide rollers (34) are mounted in a freely rotatable manner on each rocker-type runner (30), said guide rollers being supported on an opposite vertical surface (38) of the C-shaped rail (22) of the slotted guide link (20) and the axes of rotation of said guide rollers running radially with respect to the horizontal tilting axis (A).

4. Transport cart according to one of the preceding claims, **characterized in that** the supporting frame (24) is lockable in both lateral tilting positions and in the vertical transport position.

5. Transport cart according to Claim 4, **characterized in that** a spring-loaded bolt (46) which is adjustable axially parallel to the horizontal tilting axis (A) and for the latching engagement of which three bores (40) are provided in the opposite slotted guide link (20) is arranged for the locking to one of the two rocker-type runners (30).

6. Transport cart according to Claim 5, **characterized in that** the bores (40) are at an angular distance (α) of 30° to each other.

7. Transport cart according to Claim 5 or 6, **characterized in that** the axially adjustable bolt (46) is arranged in a tube (42) which connects the two partially circular rocker-type runners (30) centrally to each other and on which the central of the supporting rollers (32) is mounted.

8. Transport cart according to Claim 7, **characterized in that** a pedal (44) which is attached to the supporting frame (24) serves for releasing the bolt (46) from its latching position engaging in the respective bore (40).

## Revendications

1. Chariot de transport avec un châssis roulant (12) et un cadre de support (24) monté sur celui-ci pour recevoir un récipient avec une ouverture supérieure pour le remplissage et pour le prélèvement de produit à transporter, dans lequel le cadre de support (24) est monté sur le châssis roulant (12) d'une façon inclinable vers les deux côtés autour d'un axe horizontal (A) à partir d'une position de transport verticale, dans laquelle l'ouverture du récipient est tournée vers le haut, **caractérisé en ce que** le cadre de support (24) comporte deux barres oscillantes (30) en forme de partie de cercle, situées dans des plans verticaux parallèles, dont chacune est en prise avec une coulisse de guidage (20) également en forme de partie de cercle installée sur le châssis roulant (12).

2. Chariot de transport selon la revendication 1, **caractérisé en ce que** chacune des deux coulisses de guidage (20) situées dans des plans verticaux parallèles se compose d'un rail (22) en forme de C en section transversale, dans lequel peuvent venir en prise des galets de support (32) pouvant tourner autour d'axes horizontaux, qui sont saillants sur la barre oscillante associée (30) du cadre de support (24).

3. Chariot de transport selon la revendication 1 ou 2, **caractérisé en ce que** des galets de guidage (34) pouvant tourner librement sont montés sur chaque barre oscillante (30), qui s'appuient sur une face verticale opposée (38) du rail en forme de C (22) de la coulisse de guidage (20) et dont les axes de rotation s'étendent radialement par rapport à l'axe de basculement horizontal (A).

4. Chariot de transport selon l'une quelconque des revendications précédentes, **caractérisé en ce que** le cadre de support (24) peut être verrouillé dans les deux positions inclinées latérales et dans la position de transport verticale.

5. Chariot de transport selon la revendication 4, **caractérisé en ce qu'**un boulon avec ressort (46), déplaçable axialement parallèlement à l'axe de basculement horizontal (A), est disposé sur une des deux barres oscillantes (30) en vue du verrouillage, et trois alésages (40) sont pratiqués dans la coulisse de guidage opposée (20) pour son engagement d'encliquetage.

6. Chariot de transport selon la revendication 5, **caractérisé en ce que** les alésages (40) présentent une distance angulaire (α) de 30° l'une de l'autre.

7. Chariot de transport selon la revendication 5 ou 6, **caractérisé en ce que** le boulon déplaçable axialement (46) est disposé dans un tube (42) reliant l'une à l'autre en leur milieu les deux barres oscillantes (30) en forme de partie de cercle, sur lequel le galet de support médian (32) est monté.

8. Chariot de transport selon la revendication 7, **caractérisé en ce qu'**une pédale (44) installée sur le cadre de support (24) permet de libérer le boulon (46) hors de sa position d'encliquetage engagée dans l'alésage respectif (40).
